# EUROPÄISCHE PATENTSCHRIFT

(11) **EP 3 068 666 B1**
(45) Veröffentlichungstag und Bekanntmachung des Hinweises auf die Patenterteilung: **15.11.2017**
(21) Anmeldenummer: 14766907.1
(22) Anmeldetag: 13.09.2014
(51) Int. Cl.: B60R 25/04, F02N 11/08, B60R 25/20

(54) **KRAFTFAHRZEUG MIT FERNSTART UND AUTOMATISCHER WIEDERABSCHALTUNG**
MOTOR VEHICLE WITH REMOTE START AND SUBSEQUENT AUTOMATIC SHUTDOWN
VÉHICULE AUTOMOBILE À DÉMARRAGE À DISTANCE ET NOUVEL ARRÊT AUTOMATIQUE

(30) Priorität: 15.11.2013 DE 102013019140
(43) Veröffentlichungstag der Anmeldung: 21.09.2016
(73) Patentinhaber: Audi AG, 85045 Ingolstadt (DE)
(72) Erfinder: GEISSENHÖNER, Martin, 85055 Ingolstadt (DE)
(74) Vertreter: Brandt, Kai
(86) Internationale Anmeldenummer: PCT/EP2014/002481
(87) Internationale Veröffentlichungsnummer: WO 2015/070938

(56) Entgegenhaltungen:
- DE-A1-102008 039 303
- DE-A1-102009 022 638
- US-A- 5 757 086
- US-A1- 2008 203 815
- US-A1- 2009 265 048
- US-A1- 2011 202 201

## Beschreibung

Die Erfindung betrifft ein Kraftfahrzeug mit einer Fernstarteinheit, einer Wiederabschalteinrichtung und einer Funkschlüsseleinrichtung. Die Fernstarteinheit ist dazu ausgelegt, eine Verbrennungskraftmaschine des Kraftfahrzeugs bei drahtlosem Empfang eines Fernstartsignals zu starten, um z.B. dar Kraftfahrzeug im Winter vorzuheizen, bevor der Fahrer einsteigt. Das Fernstarten eines Kraftwagens ist auch als Remotestart-Funktion bekannt. Die Wiederabschalteinrichtung ist dazu ausgelegt, die Verbrennungskraftmaschine nach einem Start durch die Fernstarteinheit in Abhängigkeit von einer Abschaltbedingung wieder abzuschalten, um z.B. eine missbräuchliche Nutzung des Kraftfahrzeugs zu verhindern.

So ist in der US 2009/0265048 A1 ist ein Kraftwagen mit einer Fernstarteinheit und einer Autorisierungsvorrichtung beschrieben, die verhindert, dass nach einem Fernstart, wenn sich der Kraftwagen im Zustand "ferngestartet" mit laufender Verbrennungskraftmaschine befindet, eine nicht-autorisierte Person in den Kraftwagen springt und damit davonfährt. Hierzu wird durch die Autorisierungsvorrichtung überprüft, ob sich ein autorisierter Funkschlüssel im Inneren des Kraftwagens befindet, während eine Person versucht, mit dem ferngestarteten Kraftwagen loszufahren.

Weitere Kraftwagen mit Fernstarteinrichtung sind aus der US 2011/0202201 A1, der US 2008/0203815 A1, der US 5,757,086 A, der DE 10 2009/022 638 A1 und der DE 10 2008 039 303 A1 bekannt.

Um mit in einem ferngestarteten Kraftwagen gleich losfahren zu können, ist aus dem Stand der Technik bekannt, den Motorlauf durch Drücken eines das Zündschloss ersetzenden Start-Stopp-Tasters zu übernehmen, d.h. die Wiederabschalteinrichtung zu deaktivieren, so dass die ferngestartete und noch laufende Verbrennungskraftmaschine nicht wieder automatisch abgeschaltet wird. Die Übernahme muss allerdings in der Regel innerhalb von 30 Sekunden nach dem Schließen der Fahrertür geschehen. Ansonsten wird zuvor die Wiederabschalteinrichtung aktiv, das heißt sie schaltet die Verbrennungskraftmaschine ab. Die Wiederabschaltbedingung überprüft nämlich die Abschaltbedingung, dass nach dem Schließen der Fahrertür der Start-Stopp-Taster innerhalb der 30 Sekunden bedient worden sein muss. Nach Ablauf dieser Zeitdauer wird der Motor dann durch die Wiederabschalteinrichtung gestoppt. Der Grund für das Wiederabschalten der Verbrennungskraftmaschine nach diesem Zeitraum kann beispielsweise ein Diebstahlschutz sein. Es kann hierdurch auch eine Gebrauchssicherheit gewährleistet werden, so dass Kinder, die in den ferngestarteten Kraftwagen eingestiegen sind, nicht unbeaufsichtigt den Kraftwagen in Bewegung setzen können.

Nachteilig beim automatischen Wiederabschalten der Verbrennungskraftmaschine nach einem Fernstart ist, dass der Fahrer innerhalb des Zeitraumes von beispielsweise 30 Sekunden gezwungen ist, durch Drücken der Start-Stopp-Taste den Remotestart-Motorlauf zu übernehmen. Wird er dagegen abgelenkt oder aufgehalten, so wird die Verbrennungskraftmaschine abgeschaltet und es ist ein Neustart erforderlich.

Der Erfindung liegt die Aufgabe zugrunde, das Wiederabschalten einer Verbrennungskraftmaschine nach einem Remotestart flexibler an die Situation des Fahrers anzupassen.

Die Aufgabe wird durch die Gegenstände der unabhängigen Patentansprüche gelöst. Vorteilhafte Weiterbildungen der Erfindung sind durch die Merkmale der abhängigen Patentansprüche gegeben.

Durch die Erfindung ist ein Verfahren bereitgestellt, mittels welchem in zunächst bekannter Weise eine Verbrennungskraftmaschine des Kraftfahrzeugs dahingehend betrieben wird, dass die Verbrennungskraftmaschine durch eine Fernstarteinheit bei drahtlosem Empfang eines Fernstartsignals gestartet wird. Das Fernstartsignal kann dazu in an sich bekannter Weise durch eine dafür bereitgestellte Fernbedienung von einem Benutzer des Kraftfahrzeugs erzeugt werden. Nachdem die Verbrennungskraftmaschine ferngestartet wurde, sich also noch kein Fahrer im Kraftfahrzeug befindet, wird durch eine Wiederabschalteinrichtung überwacht, ob eine Abschaltbedingung erfüllt ist. Ist dies der Fall, ist also die Abschaltbedingung erfüllt, so wird die Verbrennungskraftmaschine wieder abgeschaltet. Im Stand der Technik ist hierbei in der Regel vorgesehen, dass als Abschaltbedingung gilt, dass nach einem Schließen der Fahrertür innerhalb von 30 Sekunden der Start-Stopp-Taster für die Verbrennungskraftmaschine gedrückt worden sein muss. Andernfalls wird die Verbrennungskraftmaschine abgeschaltet.

Bei dem erfindungsgemäßen Verfahren ist nun eine andere Abschaltbedingung vorgesehen. Diese beruht auf einer Funkschlüsseleinrichtung des Kraftfahrzeugs. Die Funkschlüsseleinrichtung kann in aus dem Stand der Technik bekannter Weise ausgelegt sein, das heißt sie ist dazu ausgelegt, in dem Fahrgastraum des Kraftfahrzeugs einen sogenannten Schlüsselscan durchzuführen, durch welchen eine Funkschlüsselpräsenz detektiert wird. Der Schlüsselscan kann z.B. das Aussenden eines Anfragesignals durch die Funkschlüsseleinrichtung und (bei präsentem Funkschlüssel) Empfangen eines vom Funkschlüssel zurückgesendeten Antwortsignals umfassen. Sitzt der Fahrer im Kraftwagen und hat er seinen Funkschlüssel bei sich, so wird dieser Funkschlüssel im Fahrgastraum somit anhand des Antwortsignals drahtlos detektiert. Die Funkschlüsseleinrichtung signalisiert die Funkschlüsselpräsenz dann mittels eines Funkschlüsselpräsenzsignals.

Bei dem erfindungsgemäßen Verfahren gilt nun als Abschaltbedingung für das Wiederabschalten der Verbrennungskraftmaschine nach einem Fernstart, dass für eine vorbestimmte Mindestzeitdauer das Schlüsselpräsenzsignal inaktiv gewesen sein muss. Mit anderen Worten muss seit dem letzten Erkennen der Funkschlüsselpräsenz die Mindestzeitdauer vergangen sein. Erst danach schaltet die Wiederabschalteinrichtung die Verbrennungskraftmaschine wieder ab. Die Mindestzeitdauer kann beispielsweise in einem Bereich von 20 Sekunden bis 2 Minuten liegen. Eine Funkschlüsseleinrichtung führt den Schlüsselscan in der Regel nur nach dem Drücken des Start-Stopp-Tasters durch. Beim erfindungsgemäßen Verfahren ist aber zusätzlich oder alternativ dazu vorgesehen, dass eine Personenanwesenheit im Fahrgastraum detektiert wird. Wird die Personenanwesenheit detektiert, so wird zumindest einmal zu einem vorbestimmten Zeitpunkt ein Steuersignal erzeugt, durch welches der Schlüsselscan bei der Funkschlüsseleinrichtung ausgelöst wird.

Beispielsweise kann detektiert werden, ob der Fahrer ein Gurtschloss betätigt, also sich anschnallt. Dies wird dann als Personenanwesenheit gewertet und das Steuersignal erzeugt. Somit hat der Fahrer nach dem Schließen des Gurtes wieder für die vorbestimmte Mindestzeitdauer, also beispielsweise 30 Sekunden, Zeit, den Start-Stopp-Taster zu drücken. Steigt der Fahrer also ein, schließt die Fahrertür und verbringt zunächst 20 Sekunden damit, sich anzuschnallen, würde ihm beim Stand der Technik für den Fall, dass die Wiederabschalteinrichtung nur 30 Sekunden wartet, noch 10 Sekunden zum Drücken des Start-Stopp-Tasters verbleiben. Bei dem erfindungsgemäßen Verfahren wird nach dem Anschnallen das Steuersignal erzeugt, so dass die Zeitzählung bei der Wiederabschalteinrichtung erneut beginnt und dem Fahrer wieder erneut beispielsweise 30 Sekunden Zeit bleiben, um den Start-Stopp-Taster zu drücken. Die Personendetektion führt in dem erfindungsgemäßen Kraftfahrzeug eine Überwachungseinrichtung durch, die beispielsweise ein Programmmodul für ein Steuergerät oder eine zentrale Recheneinrichtung sein kann. Die Überwachungseinrichtung detektiert die Person mittels einer Sensoreinrichtung des Kraftfahrzeugs.

Durch das erfindungsgemäße Verfahren ergibt sich der Vorteil, dass keine zeitliche Einschränkung bei der Übernahme des Motorlaufes mehr vorhanden ist, solange der Fahrer andere, von der Überwachungseinrichtung mittels der Sensoreinrichtung erkennbare Bedienhandlungen im Kraftfahrzeug ausführt. Hierdurch ergibt sich also ein erhöhter Benutzerkomfort.

Zum Durchführen des erfindungsgemäßen Verfahrens ist durch die Erfindung auch ein Kraftfahrzeug bereitgestellt, das die beschriebenen Einrichtungen, nämlich die Fernstarteinheit, die Wiederabschalteinrichtung und die Funkschlüsseleinrichtung aufweist. Die Fernstarteinheit ist dazu ausgelegt, eine Verbrennungskraftmaschine des Kraftfahrzeugs bei drahtlosem Empfang eines Fernstartsignals zu starten. Die Wiederabschalteinrichtung ist dazu ausgelegt, die Verbrennungskraftmaschine nach einem Start durch die Fernstarteinheit in Abhängigkeit von einer Abschaltbedingung wieder abzuschalten. Die Funkschlüsseleinrichtung ist dazu ausgelegt, in einem Fahrgastraum des Kraftfahrzeugs durch einen Schlüsselscan eine Funkschlüsselpräsenz zu detektieren und mittels eines Schlüsselpräsenzsignals zu signalisieren. Bei dem erfindungsgemäßen Kraftfahrzeug umfasst die Abschaltbedingung, dass für eine vorbestimmte Mindestzeitdauer das Schlüsselpräsenzsignal inaktiv gewesen sein muss, das heißt für die vorbestimmte Mindestzeitdauer, beispielsweise 30 Sekunden, darf kein erfolgreicher Schlüsselscan durchgeführt worden sein, durch welchen das Schlüsselpräsenzsignal zum Anzeigen einer Funkschlüsselpräsenz erzeugt worden ist. Der erfindungsgemäße Kraftwagen weist des Weiteren die beschriebene Überwachungseinrichtung auf, welche dazu ausgelegt ist, mittels einer Sensoreinrichtung des Kraftfahrzeugs, also einem oder mehreren Sensoren, eine Personenanwesenheit im Fahrgastraum zu detektieren und bei detektierter Personenanwesenheit zu zumindest einem vorbestimmten Zeitpunkt jeweils mittels eines Steuersignals den Schlüsselscan auszulösen.

Gemäß einer Weiterbildung des erfindungsgemäßen Kraftfahrzeugs werden durch die Überwachungseinrichtung mittels der Sensoreinrichtung folgende Ereignisse oder zumindest eine (nicht-leere) Teilmenge aus den Ereignissen erfasst: das Schließen einer Außentür des Kraftfahrzeugs, das Schließen eines Gurtschlosses, das Betätigen eines der Pedale des Kraftfahrzeugs, eine erstmalige Aktivität des Schlüsselpräsenzsignals nach dem Start durch die Fernstarteinheit, eine Bewegungserkennung durch einen Bewegungssensor, eine Sitzbelegungserkennung. Die für das Erkennen dieser Ereignisse nötigen Sensoren können aus dem Stand der Technik entnommen werden. Zur Bewegungserkennung kann hierbei aber insbesondere auch eine Kamera verwendet werden, wie sie beispielsweise in einem Dachhimmel des Kraftfahrzeugs oder in einem Spiegel des Kraftfahrzeugs angeordnet sein kann. Auch eine Kamera eines Eye-Trackers zur Blickrichtungserkennung kann verwendet werden. Die Kamera kann auch eine Infrarotkamera sein, was den besonderen Vorteil hat, dass auch im Dunkeln erkannt werden kann, ob sich eine Person innerhalb des Kraftfahrzeugs bewegt. Bevorzugt wird hierbei überprüft, ob eine Bewegung in einem Bereich des Fahrersitzes stattgefunden hat und nicht auf einem Beifahrersitz oder auf einer Rückbank. Hierdurch wird vermieden, dass auch spielende Kinder das automatische Abschalten der Verbrennungskraftmaschine durch ihre Bewegung verhindern.

Eine Weiterbildung des erfindungsgemäßen Kraftfahrzeugs sieht vor, dass die Überwachungseinrichtung das Steuersignal nach Erkennen der Personenanwesenheit nicht nur einmal erzeugt, sondern mehrmals und/oder zyklisch. Hierdurch wird wiederholt ein Schlüsselscan nach einmaligem Erkennen einer Personenanwesenheit durchgeführt. Dies ergibt den Vorteil, dass der Fahrer nicht immer wieder neue Handlungen ausführen muss, um das automatische Abschalten der Verbrennungskraftmaschine durch die Wiederabschalteinrichtung zu verhindern. Der wiederholte Schlüsselscan kann dann nach einer vorbestimmten Höchstdauer beendet werden, wenn bis dahin keine Remotestart-Übernahme durch den Fahrer erfolgt ist. Beispielsweise kann der wiederholte Schlüsselscan bei einer Höchstdauer beendet werden, die in einem Bereich von 1 Minute bis 5 Minuten oder bis 10 Minuten liegen kann.

Bei einem zyklischen Schlüsselscan beträgt die Zyklusdauer bevorzugt weniger als die Mindestzeitdauer oder zumindest ist die Zyklusdauer gleich der Mindestzeitdauer. Hierdurch wird vermieden, dass das Schlüsselpräsenzsignal zu spät erzeugt wird und die Wiederabschalteinrichtung die Verbrennungskraftmaschine abschaltet, obwohl sich ein Fahrer im Kraftfahrzeug aufhält.

Anstelle eines automatisch wiederholten Schlüsselscans kann auch vorgesehen sein, dass die Überwachungseinrichtung die Personenanwesenheit nach dem Fernstart mehrmals überprüft und nach jeder detektierten Personenanwesenheit das Steuersignal einmal erzeugt. Hierdurch ist sichergestellt, dass die Verbrennungskraftmaschine so früh wie nach der Abschaltbedingung möglich wieder abgeschaltet wird. Dies verhindert einen unnötigen Energieverbrauch der Verbrennungskraftmaschine.

Um die Überwachungseinrichtung und die Wiederabschalteinrichtung aufeinander abzustimmen, sieht eine Weiterbildung des erfindungsgemäßen Kraftfahrzeugs vor, dass die Überwachungseinrichtung bei detektierter Personenanwesenheit das Steuersignal erstmals innerhalb der Mindestzeitdauer erzeugt. So erreicht das Steuersignal zum Auslösen des Schlüsselscans die Funkschlüsseleinrichtung rechtzeitig, so dass bei anwesendem Fahrer das Schlüsselpräsenzsignal früh genug erzeugt wird, um das Wiederabschalten durch die Wiederabschalteinrichtung zu verhindern.

Um auch bei dem erfindungsgemäßen Kraftfahrzeug eine Remotestart-Übernahme zu ermöglichen, sieht eine Weiterbildung vor, dass eine Übernahmeeinrichtung bereitgestellt ist, die dazu ausgelegt ist, ein betätigungsabhängiges Übernahmesignal zum Deaktivieren der Abschalteinrichtung zu erzeugen. Mit anderen Worten muss die Übernahmeeinrichtung vom Fahrer betätigt werden, damit sie das Übernahmesignal erzeugt. Bei der Übernahmeeinrichtung kann es sich beispielsweise um den beschriebenen Start-Stopp-Taster für die Verbrennungskraftmaschine handeln. Zusätzlich oder alternativ dazu kann auch ein anderes Bedienelement bereitgestellt sein, welches von einem im Kraftfahrzeug sitzenden Fahrer durch eine bewusste Handlung zu bedienen ist, um die Wiederabschalteinrichtung zu deaktiveren.

Das erfindungsgemäße Kraftfahrzeug ist bevorzugt als Kraftwagen, insbesondere als Personenkraftwagen, ausgestaltet.

Zu der Erfindung gehören auch Weiterbildungen des erfindungsgemäßen Verfahrens, welche Merkmale aufweisen, die hier bereits im Zusammenhang mit den Weiterbildungen des erfindungsgemäßen Kraftfahrzeugs beschrieben worden sind. Aus diesem Grund werden die entsprechenden Weiterbildungen des erfindungsgemäßen Verfahrens hier nicht noch einmal beschrieben.

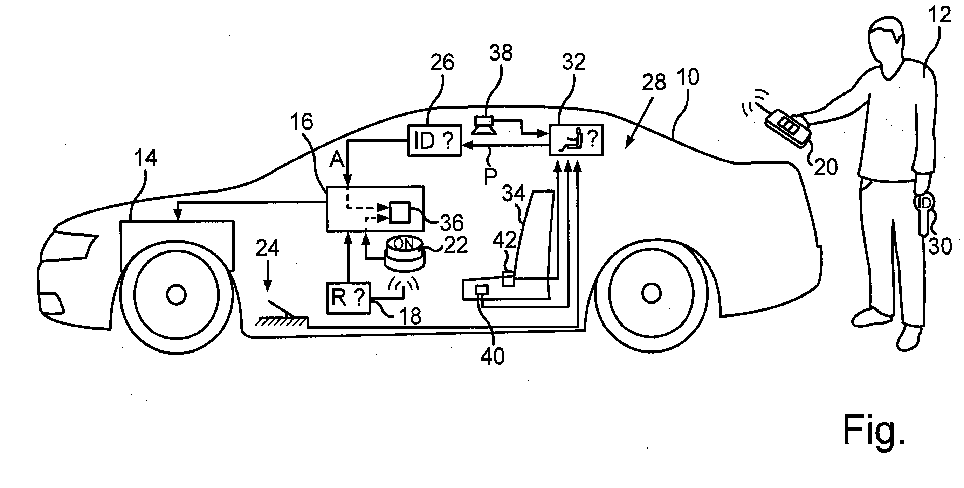

Im Folgenden ist ein Ausführungsbeispiel der Erfindung beschrieben. Hierzu zeigt die einzige Figur (Fig.) eine Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Fig. ist ein Kraftfahrzeug 10 gezeigt, bei dem es sich beispielsweise um einen Kraftwagen, insbesondere einen Personenkraftwagen, handeln kann. Außerhalb des Kraftfahrzeugs 10 befindet sich eine Person 12, die mit dem Kraftfahrzeug 10 fahren möchte.

Das Kraftfahrzeug 10 kann als Antriebsmotor eine Verbrennungskraftmaschine 14, also beispielsweise einen Ottomotor oder einen Dieselmotor, aufweisen. Die Verbrennungskraftmaschine 14 kann durch eine Steuereinrichtung 16 gestartet und auch ausgeschaltet werden. Die Steuereinrichtung 16 kann beispielsweise eines oder mehrere Steuergeräte und/oder eines oder mehrere Programmmodule umfassen.

Das Kraftfahrzeug 10 kann des weiteren eine Fernstarteinheit 18 aufweisen. Die Fernstarteinheit 18 kann mit der Verbrennungskraftmaschine 14 und/oder der Steuereinrichtung 16 gekoppelt sein. Die Fernstarteinheit 18 kann in an sich bekannter Weise dazu ausgelegt sein, ein Fernstartsignal R von einer Fernsteuerung 20 zu empfangen, welche von der Person 12 bedient werden kann. Die Fernsteuerung 20 kann beispielsweise ein ausschließlich zum Erzeugen des Fernstartsignals R bereitgestelltes Gerät sein oder beispielsweise auch ein Smartphone, welches eine entsprechende Steuersoftware (APP - Applikation) aufweist, mittels welcher das Smartphone auf einen Bedienbefehl der Person hin das Fernstartsignal R erzeugt.

Das Kraftfahrzeug 10 kann des Weiteren ein Startbedienelement 22 und ein Bremspedal 24 aufweisen. Das Startbedienelement 22 kann beispielsweise ein Startknopf sein, der dazu vorgesehen ist, einen schlüssellosen Start der Verbrennungskraftmaschine 14 zu ermöglichen, wie es an sich aus dem Stand der Technik bekannt ist.

Das Kraftfahrzeug 10 kann auch eine Funkschlüsseleinrichtung 26 aufweisen, die beispielsweise bei Betätigen des Startbedienelements 22 überprüft, ob sich in einem Fahrgastraum 28 ein Funkschlüssel 30 befindet, in welchem Identifikationsdaten ID gespeichert sein können, durch welche die Person 12 zum Bedienen des Kraftfahrzeugs 10 autorisiert wird. Hierzu kann die Funkschlüsseleinrichtung 26 einen Schlüsselscan durchführen. Die Funkschlüsseleinrichtung 26 kann hierzu in an sich bekannter Weise ausgestaltet sein. Die Funkschlüsseleinrichtung 26 signalisiert gegebenenfalls durch ein Schlüsselpräsenzsignal A beispielsweise der Steuereinrichtung 16, dass sich der Funkschlüssel 30 gerade im Fahrgastraum 28 befindet.

Das Kraftfahrzeug 10 kann des weiteren eine Überwachungseinrichtung 32 aufweisen, durch welche die Anwesenheit einer Person im Fahrgastraum 28 durch ein Personenpräsenzsignal P beispielsweise der Steuereinrichtung 16 signalisiert wird. Die Überwachungseinrichtung 32 kann ebenfalls auf an sich bekannter Technologie beruhen.

Bei dem Kraftfahrzeug 10 ist es der Person 12 möglich, zunächst einen Fernstart von außerhalb des Kraftfahrzeugs auszulösen, also mit der Fernsteuerung 20 das Fernstartsignal R zu erzeugen, so dass durch die Fernstarteinheit 18 die Verbrennungskraftmaschine 14 gestartet wird und z.B. eine (nicht gezeigte) Klimaanlage mit Energie versorgt. Danach kann sich die Person 12 in das Kraftfahrzeug 10 setzen, also eine (nicht dargestellte) Fahrertür des Kraftfahrzeugs 10 öffnen und sich auf einen Fahrersitz 34 setzen. Die Person 12 kann dann beispielsweise durch Betätigen des Startbedienelements 22 den Fernstart übernehmen, das heißt ab einer Betätigung des Startbedienelements 22 bleibt die Verbrennungskraftmaschine 14 solange in Betrieb, bis die Person 12 die Verbrennungskraftmaschine 14 selbst abschaltet, beispielsweise durch erneutes Drücken des Startbedienelements 22.

In dem Kraftfahrzeug 10 kann aber auch eine Wiederabschalteinrichtung 36 bereitgestellt sein, welche die Verbrennungskraftmaschine nach einem Fernstart durch die Fernstarteinheit 18 ohne ein Zutun des Fahrers wieder abschaltet, wenn erkannt wird, dass die Person 12 offenbar nicht sofort mit dem Kraftfahrzeug 10 losfahren möchte, nachdem die Fahrertür des Kraftfahrzeugs 10 einmal geöffnet und wieder geschlossen wurde. Hierzu überprüft die Überwachungseinrichtung 36 eine Abschaltbedingung. Das Überprüfen kann beispielsweise beginnen, nachdem einmal das Öffnen und wieder Schließen der Fahrertür oder einer anderen Außentür des Kraftfahrzeugs 10 erkannt worden ist.

Im Stand der Technik ist eine solche Überwachungseinrichtung bekannt, bei welcher nach dem Schließen der Fahrertür einer Person im Fahrgastraum 28 eine vorbestimmte Zeitdauer, beispielsweise 30 Sekunden, verbleibt, um das Startbedienelement 22 zu betätigen. Bei unbetätigtem Startbedienelement 22 wird nach der Zeitdauer durch die Wiederabschalteinrichtung 36 die Verbrennungskraftmaschine 14 abgeschaltet.

Bei dem Kraftfahrzeug 10 ist der Person 12 dagegen situationsabhängig mehr Zeit bereitgestellt. Es wird die Verbrennungskraftmaschine 14 erst abgeschaltet, wenn klar ist, dass sich die Person 12 für eine längere Zeitdauer mit etwas anderem als der Vorbereitung zum Losfahren beschäftigt. Hierzu ist bei der Wiederabschalteinrichtung 36 das Abschalten der Verbrennungskraftmaschine 14 davon abhängig, ob sich der Funkschlüssel 30 im Fahrgastraum 28 befindet. Hierzu überwacht die Wiederabschalteinrichtung 36, ob durch die Funkschlüsseleinrichtung 26 das Autorisierungssignal erzeugt wird. Ist das Autorisierungssignal A für eine vorbestimmte Mindestzeitdauer nicht erzeugt worden, so ist davon auszugehen, dass sich die Person 12 gar nicht im Kraftfahrzeug 10 befindet und deshalb die Verbrennungskraftmaschine 14 nach einem Betätigen der Fahrertür also doch abgeschaltet werden kann. Entsprechend erzeugt die Wiederabschalteinrichtung 36 bei erfüllter Abschaltbedingung ein Abschaltsignal, durch welches die Verbrennungskraftmaschine 14 abgeschaltet wird.

Damit die Funkschlüsseleinrichtung 26 das Autorisierungssignal A erzeugt, muss ein Schlüsselscan durchgeführt werden und hierbei der Funkschlüssel 30 im Inneren des Kraftfahrzeugs 10, also im Fahrgastraum 28, detektiert werden. Damit wiederholt ein Schlüsselscan durch die Funkschlüsseleinrichtung 26 durchgeführt wird, wird durch die Überwachungseinrichtung 32 überwacht, ob es einen Hinweis darauf gibt, dass die Person 12 nach dem Schließen der Fahrertür oder einer anderen Außentür sich überhaupt im Fahrgastraum 28 aufhält. Hierzu kann die Überwachungseinrichtung 32 Signale von einem oder mehreren Sensoren des Kraftfahrzeugs 10 auswerten. Beispielsweise kann ein jeweiliges Sensorsignal einer Kamera 38, eines Sitzbelegungssensors 40 des Fahrersitzes 34, eines Gurtschlosses 42 mit einem Sensor zum Erfassen eines eingesteckten Sicherheitsgurtes und/oder eines Betätigungssensor für das Pedal 24 auswerten. Falls anhand des zumindest einen ausgewerteten Sensorsignals durch die Überwachungseinrichtung 32 erkannt wird, dass nach dem Schließen der Fahrertür oder einer anderen Außentür sich eine Person im Fahrgastraum 28 befindet, also eine Veränderung in dem Fahrgastraum 28 anhand des zumindest einen Sensorsignals erkannt wird, wird durch die Überwachungseinrichtung 32 zu vorbestimmten Zeitpunkten beispielsweise zyklisch oder periodisch oder auch einmalig nach jeder erneuten Detektion das Präsenzsignal P an die Funkschlüsseleinrichtung 26 ausgegeben.

Die Funkschlüsseleinrichtung 26 führt bei jedem Empfang des Präsenzsignals P einen Schlüsselscan durch und signalisiert das Ergebnis, gibt also entweder das Schlüsselpräsenzsignal A oder eben ein davon verschiedenes Signal oder gar kein Signal aus. Mit jedem Empfang des Schlüsselpräsenzsignals A erkennt die Überwachungseinrichtung 36, dass die Zeitzählung für das Überwachen der Mindestzeitdauer neu gestartet werden muss. Deshalb wird durch die Überwachungseinrichtung 36 solange die Verbrennungskraftmaschine 14 nach einem Fernstart nicht abgeschaltet, bis die Mindestzeitdauer einmal vollständig abgelaufen ist, ohne dass das Schlüsselpräsenzsignal A erneut eingetroffen ist. Erst danach wird die Verbrennungskraftmaschine 14 abgeschaltet.

Durch den wiederholt, insbesondere zyklisch, durchgeführten Schlüsselscan wird erkannt, ob sich der Funkschlüssel im Fahrgastinnenraum 28 des Kraftfahrzeugs 10 befindet. Eine Übernahme des Fernstarts durch die Person 12, also beispielsweise durch Drücken des Startbedienelements 22, ist deshalb solange möglich, wie sich der Funkschlüssel 30 im Fahrgastraum 28 befindet und er dort von er Funkschlüsseleinrichtung 26 detektiert werden kann. Die Erkennung der Fahreranwesenheit kann beispielsweise über das Schließen eines Gurtes eines Fahrzeugsitzes, beispielsweise des Fahrersitzes 34, durch das Schließen einer Außentür, beispielsweise der Fahrertür, das Betätigen eines der Pedale, beispielsweise der Pedale 24, durch einen Schlüsselscan selbst oder auch durch eine Kameraeinrichtung oder eine Sitzbelegungserkennung erfolgt.

Insgesamt ist somit durch die Erfindung die Übernahme eines Remotestart-Motorlaufes bei einem Kraftfahrzeug mit Keyless-System, also Funkschlüsseleinrichtung, ohne zeitliche Einschränkung für die Übernahme ermöglicht.

## Patentansprüche

1. Kraftfahrzeug (10) mit einer Fernstarteinheit (18), einer Wiederabschalteinrichtung (36) und einer Funkschlüsseleinrichtung (26) wobei
- die Fernstarteinheit (18) dazu ausgelegt ist, eine Verbrennungskraftmaschine (14) des Kraftfahrzeugs (10) bei drahtlosem Empfang eines Fernstartsignals (R) zu starten, und
- die Wiederabschalteinrichtung (36) dazu ausgelegt ist, die Verbrennungskraftmaschine (14) nach einem Start durch die Fernstarteinheit (18) in Abhängigkeit von einer Abschaltbedingung wieder abzuschalten, und
- die Funkschlüsseleinrichtung (26) dazu ausgelegt ist, in einem Fahrgastraum (28) des Kraftfahrzeugs (10) durch einen Schlüsselscan eine Funkschlüsselpräsenz zu detektieren und mittels eines Schlüsselpräsenzsignals (A) zu signalisieren,
**dadurch gekennzeichnet, dass** die Abschaltbedingung umfasst, dass für eine vorbestimmte Mindestzeitdauer das Schlüsselpräsenzsignal (A) inaktiv gewesen sein muss, und das Kraftfahrzeug (10) eine Überwachungseinrichtung (32) aufweist, welche dazu ausgelegt ist, mittels einer Sensoreinrichtung (24, 38, 40, 42) des Kraftfahrzeugs (10) eine Personenanwesenheit im Fahrgastraum (28) zu detektieren und bei detektierter Personenanwesenheit zu zumindest einem vorbestimmten Zeitpunkt jeweils mittels eines Steuersignals (P) den Schlüsselscan auszulösen.

2. Kraftfahrzeug (10) nach Anspruch 1, wobei die Überwachungseinrichtung (32) dazu ausgelegt ist, mittels der Sensoreinrichtung (24, 38, 40, 42) die folgenden Ereignisse oder eine Teilmenge aus den Ereignissen zu erfassen: ein Schließen einer Außentür des Kraftfahrzeugs (10), ein Schließen eines Gurtschlosses (42), ein Betätigen einer Pedale (24) des Kraftfahrzeugs (10), eine erstmalige Aktivität des Schlüsselpräsenzsignals (A) nach dem Starten durch die Fernstarteinheit (18), eine Bewegungserkennung durch einen Bewegungssensor (38), insbesondere durch eine Kamera (38), eine Sitzbelegungserkennung (40).

3. Kraftfahrzeug (10) nach einem der vorhergehenden Ansprüche, wobei die Überwachungseinrichtung (32) dazu ausgelegt ist, das Steuersignal (P) mehrmals und zyklisch zu erzeugen und hierdurch einen zyklischen Schlüsselscan zu bewirken.

4. Kraftfahrzeug (10) nach Anspruch 3, wobei eine Zyklusdauer kleiner als die Mindestzeitdauer oder gleich der Mindestzeitdauer ist.

5. Kraftfahrzeug (10) nach einem der vorhergehenden Ansprüche, wobei die Überwachungseinrichtung (32) dazu ausgelegt ist, die Personenanwesenheit nach dem Starten der Verbrennungskraftmaschine (14) durch die Fernstarteinheit (18) mehrmals durchzuführen und nach jeder detektierten Personenanwesenheit das Steuersignal (P) einmal zu erzeugen.

6. Kraftfahrzeug (10) nach einem der vorhergehenden Ansprüche, wobei die Überwachungseinrichtung (32) ausgelegt ist, bei detektierter Personenanwesenheit das Steuersignal (P) erstmals innerhalb der Mindestzeitdauer zu erzeugen.

7. Kraftfahrzeug (10) nach einem der vorhergehenden Ansprüche, wobei eine Übernahmeeinrichtung (22) bereitgestellt und dazu ausgelegt ist, ein betätigungsabhängiges Übernahmesignals zum Deaktivieren der Wiederabschalteinrichtung zu erzeugen.

8. Verfahren zum Betreiben einer Verbrennungskraftmaschine (14) eines Kraftfahrzeugs (10), indem
- durch eine Fernstarteinheit (18) die Verbrennungskraftmaschine (14) bei drahtlosem Empfang eines Fernstartsignals (R) gestartet wird und
- danach durch eine Wiederabschalteinrichtung (36) überwacht wird, ob eine Abschaltbedingung erfüllt ist, und gegebenenfalls die Verbrennungskraftmaschine (14) wieder abgeschaltet wird, wobei eine Funkschlüsseleinrichtung (26) des Kraftfahrzeugs (10) dazu ausgelegt ist, in einem Fahrgastraum (28) des Kraftfahrzeugs (10) durch einen Schlüsselscan eine Funkschlüsselpräsenz zu detektieren und mittels eines Schlüsselpräsenzsignals (A) zu signalisieren,
**dadurch gekennzeichnet, dass**
die Abschaltbedingung umfasst, dass für eine vorbestimmte Mindestzeitdauer das Schlüsselpräsenzsignal (A) inaktiv gewesen sein muss, und
durch eine Überwachungseinrichtung (32) mittels einer Sensoreinrichtung (24, 38, 40, 42) des Kraftfahrzeugs (10) eine Personenanwesenheit im Fahrgastraum (28) detektiert wird und bei detektierter Personenanwesenheit zu zumindest einem vorbestimmten Zeitpunkt mittels eines Steuersignals (P) jeweils der Schlüsselscan ausgelöst wird.

## Claims

1. Motor vehicle (10) having a remote start unit (18), a shutoff device (36) and a radio key device (26), wherein
- the remote start unit (18) is designed to start a combustion engine (14) of the motor vehicle (10) in the case of wireless receiving of a remote start signal (R), and
- the shutoff device (36) is designed to shut off the combustion engine (14) after a start by the remote start unit (18), depending on a shutoff condition, and
- the radio key device (26) is designed to detect a radio key presence in a passenger compartment (28) of the motor vehicle (10) by a key scan and to signal said radio key presence by means of a key presence signal (A),
**characterised in that**
the shutoff condition comprises that the key presence signal (A) must have been inactive for a predetermined minimum time duration, and
the motor vehicle (10) has a monitoring device (32) which is designed to detect a presence of a person in the passenger compartment (28) by means of a sensor device (24, 38, 40, 42) of the motor vehicle (10) and, in the case of a detected presence of a person at at least one predetermined point in time, to trigger the key scan by means of a control signal (P) respectively.

2. Motor vehicle (10) according to claim 1, wherein the monitoring device (32) is designed to detect the following events or a subset of the events by means of the sensor device (24, 38, 40, 42): a closing of an outer door of the motor vehicle (10), a fastening of a belt buckle (42), an actuating of a pedal (24) of the motor vehicle (10), a first activity of the key presence signal (A) after the start by the remote start unit (18), a movement detection by a movement sensor (38), in particular by a camera (38), a seat occupancy detection (40).

3. Motor vehicle (10) according to any one of the preceding claims, wherein the monitoring device (32) is designed to generate the control signal (P) several times and cyclically and to effect hereby a cyclical key scan.

4. Motor vehicle (10) according to claim 3, wherein a cycle duration is less than the minimum time duration or equal to the minimum time duration.

5. Motor vehicle (10) according to any one of the preceding claims, wherein the monitoring device (32) is designed to implement the detection of the presence of a person multiple times after the start of the combustion engine (14) by the remote start unit (18) and to generate the control signal (P) once after each detected presence of a person.

6. Motor vehicle (10) according to any one of the preceding claims, wherein, the monitoring device (32) is designed to generate the control signal (P) for the first time within the minimum time duration in the case of a detected presence of a person.

7. Motor vehicle (10) according to any one of the preceding claims, wherein an override device (22) is provided and designed to generate an actuation-dependent override signal to deactivate the shutoff device.

8. Method for operating a combustion engine (14) of a motor vehicle (10) in which
- the combustion engine (14) is started by a remote start unit (18) in the case of a wireless receiving of a remote start signal (R) and
- then it is monitored by a shutoff device (36) whether a shutoff condition is fulfilled, and if necessary the combustion engine (14) is shutoff, wherein a radio key device (26) of the motor vehicle (10) is designed to detect a radio key presence in a passenger compartment (28) of the motor vehicle (10) by a key scan and to signal said radio key presence by means of a key presence signal (A),
**characterised in that**
the shutoff condition comprises that the key presence signal (A) must have been inactive for a predetermined minimum time duration, and
a presence of a person in the passenger compartment (28) is detected by a monitoring device (32) by means of a sensor device (24, 38, 40, 42) of the motor vehicle (10) and, in the case of a detected presence of a person at at least one predetermined point in time, the key scan is triggered by means of a control signal (P) respectively.

## Revendications

1. Véhicule automobile (10) avec une unité de démarrage à distance (18), un dispositif de nouvel arrêt (36) et un dispositif à clé radioélectrique (26), dans lequel
- l'unité de démarrage à distance (18) est configurée pour démarrer un moteur à combustion interne (14) du véhicule automobile (10) lors de la réception sans fil d'un signal de démarrage à distance (R), et
- le dispositif de nouvel arrêt (36) est configuré pour arrêter à nouveau le moteur à combustion interne (14) après un démarrage par l'unité de démarrage à distance (18) en fonction d'une condition d'arrêt, et
- le dispositif à clé radioélectrique (26) est configuré pour détecter dans un habitacle (28) du véhicule automobile (10) par un balayage de clé une présence de clé radioélectrique et la signaler au moyen d'un signal de présence de clé (A),
**caractérisé en ce que**
la condition d'arrêt comprend que le signal de présence de clé (A) doit impérativement avoir été inactif pendant une durée minimale prédéfinie, et
le véhicule automobile (10) présente un dispositif de surveillance (32), qui est configuré pour détecter au moyen d'un dispositif de capteur (24, 38, 40, 42) du véhicule automobile (10) une présence de personne dans l'habitacle (28) et pour déclencher le balayage de clé à au moins un moment prédéfini respectivement au moyen d'un signal de commande (P) lorsque la présence d'une personne est détectée.

2. Véhicule automobile (10) selon la revendication 1, dans lequel le dispositif de surveillance (32) est configuré pour détecter au moyen du dispositif de capteur (24, 38, 40, 42) les événements qui suivent ou une partie des événements qui suivent : une fermeture d'une portière extérieure du véhicule automobile (10), une fermeture d'une boucle de ceinture (42), un actionnement d'une pédale (24) du véhicule automobile (10), une première activité du signal de présence de clé (A) après le démarrage par l'unité de démarrage à distance (18), une reconnaissance de mouvement par un capteur de mouvement (38), en particulier par une caméra (38), une reconnaissance d'occupation de siège (40).

3. Véhicule automobile (10) selon l'une quelconque des revendications précédentes, dans lequel le dispositif de surveillance (32) est configuré pour générer à plusieurs reprises et de manière cyclique le signal de commande (P) et pour provoquer ainsi un balayage de clé cyclique.

4. Véhicule automobile (10) selon la revendication 3, dans lequel une durée de cycle est inférieure à la durée minimale ou est égale à la durée minimale.

5. Véhicule automobile (10) selon l'une quelconque des revendications précédentes, dans lequel le dispositif de surveillance (32) est configuré pour effectuer à plusieurs reprises la détection de la présence d'une personne après le démarrage du moteur à combustion interne (14) par l'unité de démarrage à distance (18) et pour générer une fois le signal de commande (P) après chaque détection de présence de personne.

6. Véhicule automobile (10) selon l'une quelconque des revendications précédentes, dans lequel le dispositif de surveillance (32) est configuré pour générer, dans le cas de la détection de la présence d'une personne, le signal de commande (P) pour la première fois dans le cadre de la durée minimale.

7. Véhicule automobile (10) selon l'une quelconque des revendications précédentes, dans lequel un dispositif de prise de contrôle (22) est fourni et est configuré pour générer un signal de prise de contrôle dépendant de l'actionnement servant à désactiver le dispositif de nouvel arrêt.

8. Procédé servant à faire fonctionner un moteur à combustion interne (14) d'un véhicule automobile (10) en ce que
- le moteur à combustion interne (14) est démarré lors de la réception sans fil d'un signal de démarrage à distance (R) par une unité de démarrage à distance (18), et
- il est vérifié par la suite par un dispositif de nouvel arrêt (36) si une condition d'arrêt est remplie et éventuellement si le moteur à combustion interne (14) est à nouveau arrêté, dans lequel
un dispositif à clé radioélectrique (26) du véhicule automobile (10) est configuré pour détecter dans un habitacle (28) du véhicule automobile (10) la présence d'une clé radioélectrique par un balayage de clé et pour la signaler au moyen d'un signal de présence de clé (A),
**caractérisé en ce que**
la condition d'arrêt comprend que le signal de présence de clé (A) doit impérativement avoir été inactif pendant une durée minimale prédéfinie, et
la présence d'une personne dans l'habitacle (28) est détectée par un dispositif de surveillance (32) au moyen d'un dispositif de capteur (24, 38, 40, 42) du véhicule automobile (10) et respectivement le balayage de clé est déclenché à au moins un moment prédéfini au moyen d'un signal de commande (P) lorsque la présence d'une personne est détectée.
